# EUROPEAN PATENT SPECIFICATION

(11) **EP 1 285 359 B1**
(45) Date of publication and mention of the grant of the patent: **28.07.2004**
(21) Application number: 01929874.4
(22) Date of filing: 22.05.2001
(51) Int. Cl.: G06F 17/30

(54) **ADDRESSING REMOTE DATA OBJECTS VIA A COMPUTER NETWORK**
ADRESSIEREN VON FERNEN DATENOBJEKTEN ÜBER EIN RECHNERNETZWERK
ADRESSAGE D'OBJETS DE DONNEES ELOIGNES PAR L'INTERMEDIAIRE D'UN RESEAU INFORMATIQUE

(30) Priority: 22.05.2000 GB 0012357; 22.05.2000 GB 0012359; 22.05.2000 GB 0012360; 24.11.2000 GB 0028704
(43) Date of publication of application: 26.02.2003
(73) Proprietor: Bango.Net Limited, Cambridge CB1 1BH (GB)
(72) Inventor: ANDERSON, Raymond, Cambridge CB5 8DQ (GB); MALHOTRA, Anil, Cambridge CB1 2NU (GB); ASSHETON, Robert John, Cambridge CB2 5QJ (GB); BONDI, Johnathan Richard, Leeds, West Yorkshire LS18 4AG (GB)
(74) Representative: Robinson, Nigel Alexander Julian
(86) International application number: PCT/GB2001/002272
(87) International publication number: WO 2001/090937

(56) References cited:
- EP-A- 0 889 418
- EP-A- 1 143 691
- WO-A-99/22488
- US-A- 5 854 624

## Description

This invention relates to data processing systems. More particularly, this invention relates to the addressing of remote data objects, such as, for example, internet web pages, via a computer network, such as, for example, the internet.

It is known to provide addresses for data objects upon the internet using URL addresses that are constructed of alphanumeric character sequences and are unique to a particular data object. The format of this addressing structure functionally specifies a protocol, a server and a resource path on that server.

The widespread adoption of the internet with this URL addressing format has the result that the introduction of any new or alternative addressing structure faces considerable entry barriers as the existing addressing infrastructure is already so well established.

The existing URL addressing structure was developed at a time when the overwhelming majority of devices employed by users to access the internet were personal computers or workstations having a full alphanumeric keyboard. Advances in the use of the internet have lead to the development of different types of device for accessing the internet. A rapidly expanding field of access device is that of mobile telephones. Small personal digital assistants are also becoming increasingly common as internet access devices.

These new internet accessing devices typically do not have a full alphanumeric keyboard to enable the ready input of alphanumeric URL addresses. In the case of mobile telephones the numeric keypad may be used to enter letters as well as numbers with multiple letters being assigned to each key and multiple presses required on each key to select the letter required. Whilst this does provide an input mechanism for alphanumeric addresses, it is slow, inconvenient and cumbersome in use. An alternative approach that has been employed is to display an image of an alphanumeric keyboard on a touch sensitive display screen and allow the user to "type" with a stylus upon the keys of this displayed keyboard in order to enter letters. The small size of the displays associated with many devices and the lack of tactile feedback associated with this approach makes accurate and rapid entry of alphanumeric addresses difficult.

WO-A-99/32488 discloses a system for accessing a network URL through a preassigned simplified network address (numbers) correlated to the URL.

Viewed from one aspect the present invention provides a method of accessing via a computer network a remote data object having an associated primary address formed of alphanumeric characters, said method comprising the steps of:
receiving user input defining a secondary address being an alphanumeric address prefix formed of alphanumeric characters followed by a numeric address suffix formed of numeric characters;
mapping said secondary address to said primary address; and
accessing said remote data object using said primary address, characterised by the further step of
receiving at least one additional input; and in that
said step of mapping said secondary address to said primary address is dependent upon at least one of said at least one additional input.

The invention recognises that by providing an addressing structure based upon an alphanumeric prefix followed by a numeric suffix, and then mapping this address to the full alphanumeric primary address, improvements can be made in the ease in which such addresses may be entered by a user. As an example, a particular network accessing device could be arranged to automatically always insert for itself the alphanumeric prefix leaving the user only to have to specify the numeric suffix. A lookup of the mapping to the primary alphanumeric address may then be made and the primary alphanumeric address used to access the remote data object. Thus, the new addressing structure of the present invention and its associated mapping mechanism enables access to be made to existing data objects with alphanumeric addresses without requiring the user to specify those full alphanumeric addresses.

The step of mapping said secondary address to said primary address is dependent upon at least one of said additional inputs. Thus, the remote data object accessed may depend not only on the secondary address specified but also on an additional input. This means the connection made can be adapted to a particular user's requirements.

It will be appreciated that the alphanumeric prefix of the secondary address could be provided in various ways. However, strongly preferred embodiments of the invention use a common alphanumeric prefix, preferably specified using a shortcut key.

The invention is particularly well suited for devices having a numeric keypad, such as mobile telephones, as a user may specify an internet address using the numeric keypad in its intended role for entering numeric data and yet still have access to remote data objects whose true primary address is a full alphanumeric address.

It will be appreciated that the technique of the present invention could be used to access various different types of remote data object via various different types of computer network, but the invention is particularly well suited to the access of internet web pages via the internet. In this context, the primary address will be a URL address.

Whilst it would be possible to effectively hardwire the mappings from the secondary address to the primary address into the access device, such an approach would be severely limiting as it would not readily be able to cope, for example, with changes to the primary addresses and the introduction of new primary addresses. Accordingly, in preferred embodiments of the invention the mapping is performed in a remote database in order that this remote database may be readily updateable.

In this context, the alphanumeric prefix of the secondary address can be the address for the remote database with the numeric suffix being used to index a particular primary address within that remote database. Thus, a high speed and efficient mechanism that is readily maintained and extended may be provided.

Although this additional input may comprise any characteristic of the user, or the user device, advantageously, it comprises at least one of the following: location of said user, type of user device, time of user input, identity and/or demographic data of said user, operator and/or network from which said input is received, language specified by said user.

The location of the user may be provided by the user device or by a GPS system or in the case that the user is accessing the remote data object via the Internet, it may be the geographic location of the WAP gateway or voice gateway or ISP used to access the net. The type of user device specifies what the device is, for example, a mobile phone, and/or it may further specify details of the device such as its capabilities, for example, whether it can deal with Java or not.

The identity of the user may be entered by the user himself, it may be registered on and automatically transmitted by the user device, or in the case of the user device being a mobile phone it may be the cell identity of the mobile phone. The demographic data of the user may comprise such things as sex, age, preferences etc. and it may be pre-registered data on the user device or it may be registered with an accessible third party.

In some embodiments said method further comprises the step of passing at least one of said additional inputs to the location specified by said primary address. This has the advantage that the owner of the primary address can use the additional input to vary the behaviour of the content accessed, by, for example changing the language, data type, format etc. of the content accessed. This can be done dynamically through interaction with the user, or it can be done through re-direction to a static location.

In some embodiments said step of mapping said secondary address to said primary address, comprises mapping a predefined portion of said secondary address to said primary address and passing a further unused portion of said secondary address to a location specified by said primary address. Thus, a portion of the secondary address is used to access the primary address and a further portion is passed as data to the primary address.

Preferably, said method comprises an additional step prior to said accessing step, said step comprising at least one of the following: request for access credentials; transmission of a bill to said user, collection of survey data; transmission of advertising and/or sponsorship information to said user; redirection ofsaid user to a voice call. The provision of a further step enables the system to provide security if a secure system is required. It also provides a way of billing the user and transmitting material to the user. Furthermore, if the user needs to be contacted for some reason then a voice call connection can be made.

Viewed from another aspect the present invention provides apparatus for accessing via a computer network a remote data object having an associated primary address formed of alphanumeric characters, said apparatus comprising:
a user input device operable to receive user input defining a secondary address being an alphanumeric address prefix formed of alphanumeric characters followed by a numeric address suffix formed of numeric characters;
mapping logic operable to map said secondary address to said primary address; and
accessing logic operable to access said remote data object using said primary address, characterised in that
said mapping logic receives at least one additional input; and
said mapping logic is operable to map said secondary address to said primary address in dependence upon at least one of said at least one additional input.

Viewed from a further aspect the invention provides a computer program product storing a computer program for controlling operation of a computer to access via a computer network a remote data object having an associated primary address formed of alphanumeric characters, said computer program comprising:
receiver code operable to receive user input defining a secondary address being an .alphanumeric address prefix formed of alphanumeric characters followed by a numeric address suffix formed of numeric characters;
mapping code operable to map said secondary address to said primary address; and
accessing code operable to access said remote data object using said primary address, characterised in that
said mapping code receives at least one additional input; and
said mapping code is operable to map said secondary address to said primary address in dependence upon at least one of said at least one additional input.

Embodiments of the invention will now be described, by way of example only, with reference to the accompanying drawings in which:
Figure 1 schematically illustrates a computer network with different types of user access devices for accessing a remote data object;
Figure 2 is a flow diagram illustrating the mapping of a secondary address to a primary address;
Figure 3 is a diagram representing the data that may be stored within a remote server for performing the mapping between the secondary address and the primary address;
Figure 4 is a flow diagram illustrating the manner in which the price for registration of a secondary address may be determined;
Figures 5, 6 and 7 illustrate the different way in which the suffix length, relevance and duration of use may influence the price;
Figure 8 schematically illustrates a general purpose computer of the type that may be used to implement the above described technique; and
Figure 9 is a diagram illustrating the exchange of messages that may occur when accessing a remote data object using the technique of one embodiment of the present invention.

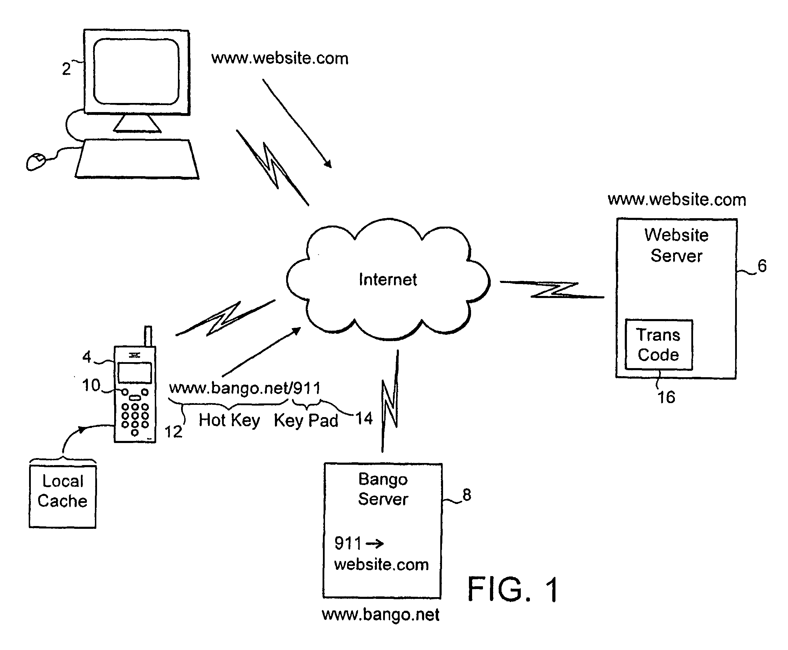

Figure 1 illustrates a plurality of computers connected via the internet to form a computer network. A conventional PC 2 is one user access device. A mobile telephone 4 is illustrated as a further user access device. The remote data object in the form of an internet web page is stored upon a web site server 6. A remote server 8 that performs a mapping from a secondary address to a primary address is also provided.

A user of the personal computer 2 will enter an alphanumeric URL address using the keyboard associated with the personal computer 2. This URL address uniquely identifies the target page upon the web site server. A domain name server (not illustrated) used by the PC 2 will map the alphanumeric address to a purely numeric IP address that will be used by the underlying internet infrastructure. It is not intended that a user would typically specify a remote data object by typing in a specific IP address for that data object.

When the user of the mobile telephone 4 wishes to access the same internet web page, they do this by pressing a short cut key 10 on the mobile telephone that specifies an alphanumeric prefix 12 that forms part of a secondary address. They then press the numeric keypad keys of the mobile telephone 4 to specify a numeric suffix 14 of the secondary address. This complete secondary address is then used to access the internet. The alphanumeric prefix 12 is the address of the remote database server 8 and accordingly the access request from the mobile telephone 4 is routed to the remote database server 8. The remote database server 8 uses the numeric suffix 14 to index into a database of mappings between numeric suffixes and primary addresses. In the example illustrated, the numeric suffix "911" maps to the primary address "WEBSITE.COM".

The remote database server 8 uses the mapping data it has looked up to redirect the access request received from the mobile telephone 4 to the web site server 6 and including the information that the request originated from the mobile telephone 4. The web site server 6 responds to this forwarded request from the remote database server 8 substantially in the same manner as if it had originated directly from the mobile telephone 4. The web site server 6 may include a transcoding unit 16 that recognises the access device as a mobile telephone and accordingly adapts the web page returned to the mobile telephone 4 into a form more suited for display upon that device. Further interaction, such as activating hypertext links on web pages or activating buttons on web pages, takes place directly between the mobile telephone 4 and the web site server 6 without requiring further intervention by the remote database server 8. The remote database server 8 only needs to be involved at those points at which a user would normally type a full alphanumeric URL address for a web page when seeking to access that web page.

In addition to the input by the user of a secondary address further additional inputs may be input from the user device 2 or 4 and sent via the internet to the remote data base server 8. These inputs may comprise any of the following: the location of the user, the type of device being used, the time of the user input, demographic data of the user, which may be pre-registered on the user device or may be stored with an accessible third party, the operator and/or network the user is coming through, a language the user has specified, cell identity if the user device is a mobile, other location identifier, such as one provided by GPS, function of user identity presented by the user device, geographic location of the WAP gateway, voice gateway or ISP (internet service provider) used to access the net, and the capabilities of the device (for example, Java or not).

In some embodiments a plurality of primary addresses may be associated with a single secondary address on the remote database server, the actual one of the plurality of primary addresses that is accessed by the remote database server depending upon one or more of the additional inputs. Alternatively, some or all of the additional inputs may be passed directly to the owner of the content stored at the primary address. The owner of the content can then vary the behaviour of the content according to these additional inputs. For example, the language of the data shown, its data type or format may be changed, depending, for example, on the native language of the user or the capabilities of the user device. This may be done dynamically or by redirection to a static location.

A further possibility is to provide the remote database server with a control means whereby a user accessing the server can be made to pass through a further step before accessing the remote data unit, in certain circumstances. For example, if the system is a secure system then the remote database server 8 may request the input of access credentials, such as a password prior to allowing access to the remote data unit. Alternatively, if the user is due to receive a bill, then the system can transmit a bill to the user prior to accessing the remote data unit. Other uses of the additional step could be the display of interstitial advertising and sponsorship, or if the user were accessing the server via a mobile phone 10 then the data access could be redirected to a voice call, if it were necessary to contact the user for a particular reason.

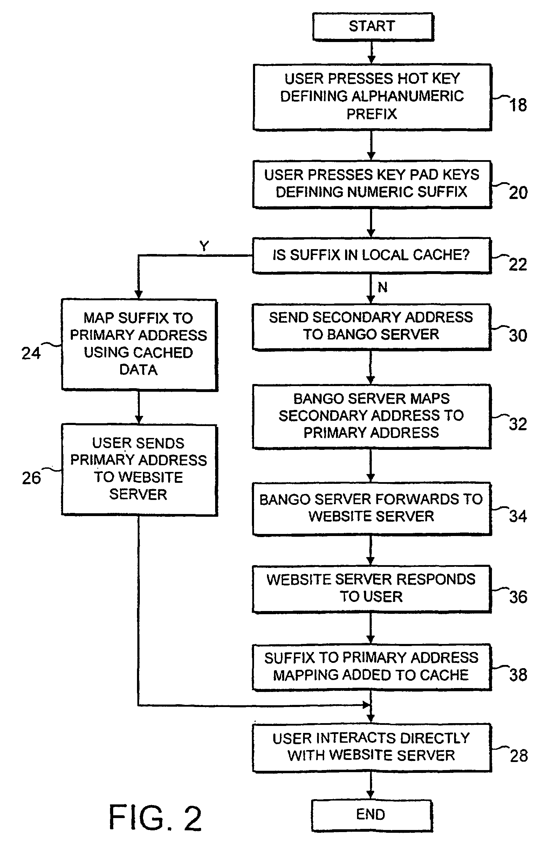

Figure 2 is a flow diagram illustrating the processes discussed in relation to Figure 1. At step 18, a user presses the shortcut key 10 to specify the alphanumeric prefix "www.bango.net". At step 20, the user then uses the numeric keypad to specify a desired numeric suffix for the web page they are seeking to access. Web page providers may advertise and publish the numeric suffixes associated with the secondary addresses for their web pages in a similar way to which publicity is currently given to the full alphanumeric addresses. Providers of the mobile telephones 4 may also seek to educate users regarding what are commonly used numeric suffixes as use of the invention makes use of mobile internet devices easier and accordingly promotes these mobile devices in general.

At step 22, a check is made as to whether or not the specified numeric suffix is one for which the mapping to the primary address is already held within a local cache within the mobile telephone. The local cache may be provided as a browser plug-in. The browser plug-in can activate when the browser is started to check, as a background task, the currency of its cached information with the remote database server 8.

If the local cache does contain the mapping sought, then processing proceeds from step 22 to step 24 at which this mapping is carried out and to step 26 at which the primary address is issued directly from the mobile telephone 4 to the web site server 6. Processing then proceeds to step 28 at which the user continues to interact directly with the web site server 6.

If the result of the test at step 22 was that the desired mapping was not locally cached, then processing proceeds to step 30 at which the secondary address comprising the alphanumeric prefix 12 identifying the remote database server 8 concatenated with the numeric suffix 14 is issued from the mobile telephone 4 and accesses the remote database server 8. At step 32, the remote database server 8 receives the request routed to it and uses the numeric portion to index a lookup table to find a particular primary address. At step 34, the remote database server 8 forwards the request received from the mobile telephone 4 onto the web site server 6 using the primary address of the web site server 6.

The web site server 6 receives the request forwarded to it by the remote database server 8 and responds to this directly to the mobile telephone user 4 at step 36. When the mobile telephone 4 receives the response from the web site server 6, this will contain the primary address of the web site server 6 and accordingly the local cache within the mobile telephone 4 may be updated at step 38. After step 38, processing proceeds to step 28 and the user of the mobile telephone 4 interacts with the web site server 6 directly in the normal way.

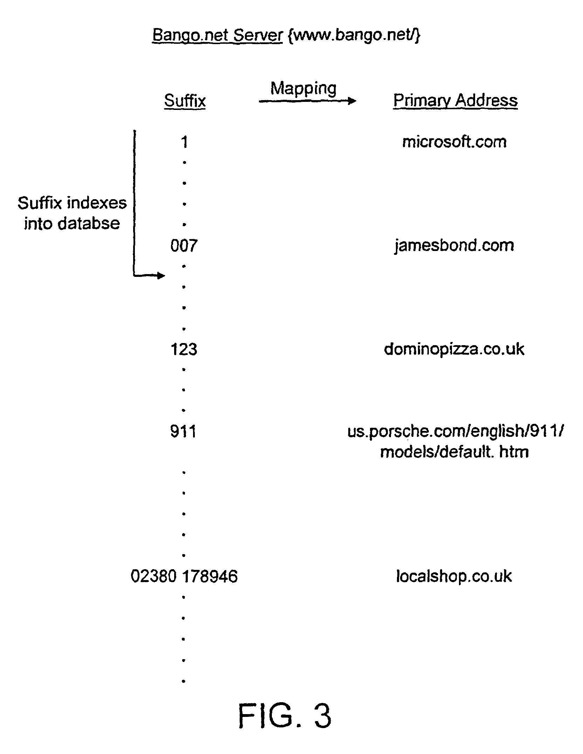

Figure 3 illustrates various examples of the data that may be held within the remote database server 8 mapping numeric suffixes to primary addresses. As will be seen, short and readily remembered numeric suffixes may be registered and paid for by large well known corporations. Numeric suffixes having well known associations and relevance to users, e.g. "007", may be allocated and associated with related primary addresses in a highly beneficial way. A small local shop may seek to use its telephone number as its numeric suffix. The use of telephone numbers as a numeric suffix is highly advantageous as these are in many cases well know to the users and already promoted by the organisations concerned. This is one way in which the need to inform and educate users as to the numeric suffixes to use for a particular web site may be simplified.

The remote database server also provides a service for content owners who do not at present own internet domains or other web sites. It is possible in this situation to buy a number in the same way as other customers and additionally to purchase storage space associated with this number. The content which may include a voice service, motion video data or text information may then be stored in the storage space on the remote database and an incoming request specifying the content owner's number is directed to this content. Thus, the information is transmitted to the user without being re-routed to another internet location. The number is mapped to a URL in the storage space of the remote data and the content is returned to the user.

Content stored on the remote database server 8 in this way may be updated and modified by the authorised owner through a variety of interfaces, including: on-line forms, http connection, OTA (Over The Air) interface or a telephone connection. For example, a common OTA interface method is SMS (short messaging service) from wireless devices. The content owner accesses their content from their wireless device, the system automatically recognising the incoming caller id.

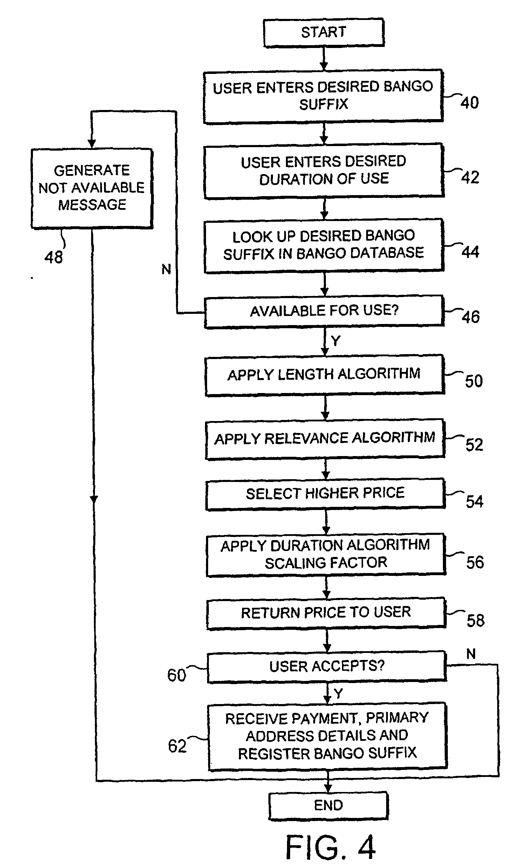

Figure 4 is a flow diagram illustrating the way in which a mapping between a numeric suffix and a primary address may be established. At step 40, a user wishing to register a particular numeric suffix enters that into a web page hosted by the remote database server 8. At step 42, the user also enters the desired duration of use (period of hire) of the specified numeric suffix.

At step 44, the remote database server 8 looks up the numeric suffix specified at step 40 and determines as step 46 whether or not it is available for use, i.e. whether it has already been registered by someone else. If the specified suffix is not available for use, then processing proceeds to step 48 at which an appropriate message is returned to the user and the registration process terminates.

If the test at step 46 indicates that the numeric suffix is available for use, then processing proceeds to step 50 at which a determination using an algorithm that calculates price in dependence upon the length of the suffix is used to establish a possible price for the registration. At step 52, an algorithm is applied to the suffix being registered that determines whether or not that suffix has any known pre-existing relevance to users. As an example, the operator of the remote database server 8 may establish that suffixes such as "007" have an enhanced value by virtue of their well known association with a fictional character. Another number such as "911" may have an enhanced value due its association with a particular well known product, such as a sports car. Further, numbers such as "123" may have an enhanced value due to being considered easy to remember.

At step 54, a selection is made between the prices determined at steps 50 and 52 to establish whichever is the higher. At step 56, a duration algorithm is applied which effectively multiplies the price already arrived at by a factor to take account of the duration for which it is desired to register that numeric suffix (i.e. the period of hire).

At step 58, the price determined for the suffix being registered is returned to the user. At step 60, the user may interact via the internet with the remote database server 8 to accept or refuse the price proposed. If the price is accepted, then processing proceeds to step 62 at which payment may be made (such as via a credit card), the primary address to be associated that suffix entered by the user and the mapping between the numeric suffix and the primary address established within the remote database server 8.

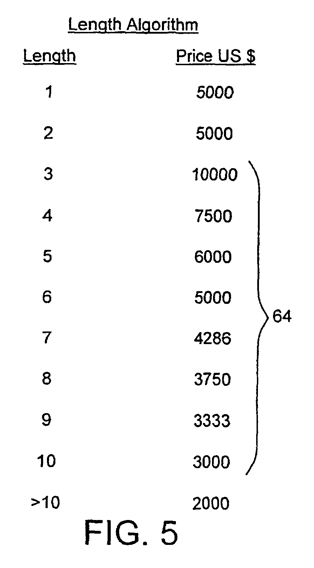

Figure 5 schematically illustrates the relationship that may be established between the length of a numeric suffix and its price. As will be seen, generally speaking as the numeric suffix becomes longer, the price to be associated with it becomes shorter. For at least a portion 64, the relationship between length and price is one in which the price is inversely proportional to the length. It will be seen that the highest prices may be associated with not necessarily the shortest numeric suffixes. Three letter numeric suffixes may be readily remembered by users and are accordingly desirable to people wishing to register those suffixes. The price associated with these three letter suffixes will accordingly be high.

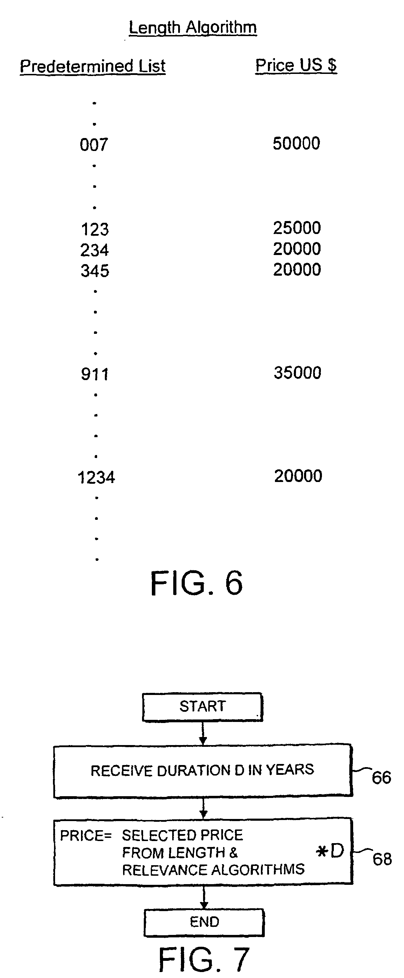

Figure 6 schematically illustrates how a relevance algorithm which seeks to establish a price for numeric suffixes that takes account of any predetermined user relevance of that suffix. More particularly, the remote database server operator can establish a list of numeric suffixes that they consider have an above average pre-existing user relevance and associate corresponding prices with them. As previously mentioned, certain famous numbers and readily remembered numbers may have associated higher prices. The remote database server 8 may check a suffix which is requested to be registered against this list to see whether or not it is one with a special price associated with it.

Figure 7 is a flow diagram illustrating how the price may be adjusted in dependence upon the duration of use. At step 66, the duration of use as entered by the person seeking to register the number at step 42 of Figure 4 is calculated as a number of years value D. The price already selected as the higher between that calculated in accordance with the principles described in Figures 5 and 6 is then multiplied by this duration factor D to determine a final price. This simple relationship would mean that it would cost twice as much to register a particular numeric suffix for two years rather than for one year. This duration algorithm might be adjusted to provide discounts for longer periods of registration, a set fee for permanent registration and a minimum fee.

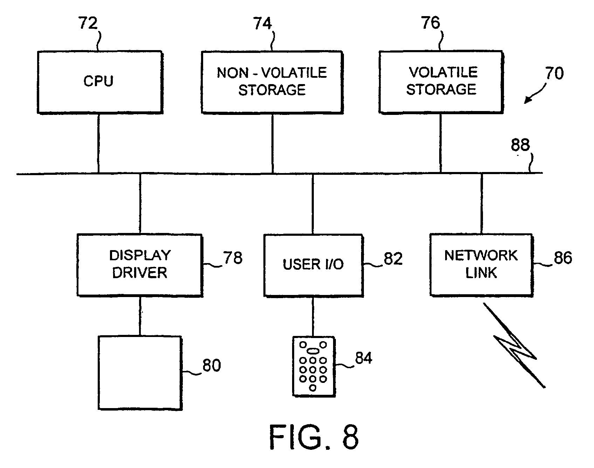

Figure 8 schematically illustrates a computer 70 of the type that may be used to implement this invention. In this case, the computer 70 is part of a mobile telephone. The computer 70 includes a central processing unit 72, a non-volatile storage unit 74, a volatile storage unit 76, a display driver 78 and display 80, a user input/output unit 82 and a numeric keypad 84, a network link unit 86 and a common bus 88. In operation, the central processing unit 72 executes computer program instructions stored within one or more of the non-volatile storage units 74 and the volatile storage unit 76 to perform the data processing operations discussed above. It will be appreciated that certain of the data processing operations are performed in the computer device used by the user seeking to access the remote data object whilst other of the operations are performed within the remote database server 8 or by the web server 6. Similar sorts of computer may be used to execute program instructions to perform these other functions. The computer programs executed effectively provide computer program code routines that correspond to different functions of the described technique. The controlling computer programs may be distributed via conventional computer program media such as floppy disks or compact disks, or may be dynamically downloaded via the network link unit 86.

Another way of viewing the present invention is described in the following pages:

These systems concern the field of addressing the World Wide Web (WWW) & the Internet. Generally World Wide Web addresses are constructed of character sequences know as URLs that define a complete path to a particular resource. The format of this address is defined in standard texts, but functionally it includes a protocol, a server and a resource path on that server. The systems described herein (named "Bango") provides an alternative addressing format that is superimposed on the underlying WWW address structure and a number of related features.

URLs provide a convenient and extendable form for addressing within Web browsers and typically mimic the structure of the underling storage of web pages. However there are many circumstances where they are both cumbersome to use and hard (or impossible) to use.

Additionally, although the address space available to be described by URLs is effectively infinite, the root (or server) component of URLs is becoming increasingly congested as companies and individuals register (reserve) most standard forms.

Currently, the use of universal resource locators is based on alphanumeric sequences of letters, and most often as known words. Confusion persists over spellings and the syntax of word combinations as users try to accurately input standard web addresses. Words do not work as well as numbers across multiple languages and may be easily mispronounced and mis-transcribed. Lately, the pool of available words for the registration of web addresses has diminished to almost nothing.

Increased use of dynamic web pages encourages the formation of complex, machine generated URLs. It is extremely hard to communicate these in printed or oral form, and transcription errors are frequent.

The use of numbers (instead of strings) provide a range of features of convenience for internet users. Numbers are often more memorable than names, less prone to mispronunciation and more standardised across multiple languages than words. There is currently no global service for allocating numbers to web locations.

"Bango" addressing has been invented in order to provide a standard alternative format for us on the WWW that avoids the issues described above.

With the proliferation of internet access devices that use numerical keypads, words are an inconvenient, time-consuming and error-prone method by which to link to the internet. Telephone and TV controllers use numeric pads as their primary interfaces and are thus somewhat disadvantaged for web access. Bango addressing enables such devices to use their standard interfaces to address web resources.

A number of alternative WWW schemes have been implemented. Examples of these include "Real Names" and AOL keywords. However neither of these schemes provides the capabilities that Bango provides

As has been outlined above, WWW addressing is both congested and potentially cumbersome. Although standard computers have historically been the primary interface for WWW users the arrival of web capable telephones, televisions and other devices without standard alphanumeric keypads makes the URL an inconvenient format. Bango addressing provides an ideal solution to these needs. Additionally URLs are cumbersome to transcript between print format and the input to WWW device.

Bango addressing provides a solution the above need, by defining a "Bango" number and the linkage and management of this number to one or more URLs. The Bango number enables a browser user or WWW capable device to simply enter a numeric sequence of numeric digits in order to be able to navigate to a specific WWW address. Additionally a Bango number is easy to identify in print format and extremely easy to enter into a WWW device at a later stage.

Bango numbers provide a precise, easily communicated, shorthand for web addresses. Many newspapers and magazines now print 100s of URLs each day but are cumbersome and error prone. Replacing these URLs with simple Bango numbers provides a vast improvement for users.

A key element of the system is the Bango number itself and the mapping of this number to a target URL.

The Bango number consists of one or more numeric digits (0-9) forming a numeric string (the string may also be prefixed by a special delimiter as described below).

A Bango server holds a directory whereby a unique Bango number is transparently mapped (from the users perspective) to a target WWW page via a simple redirection process.

The Bango server can select between multiple URLs dependent upon the requesting device or secondary attributes (such as date, day of the week, source domain etc.).

A bango number may be entered directly into a web browser via a URL of the format www.bango.net/NNNN where NNNN represent a Bango number or via usage of a shortcut form using an "escape" prefix in the form !NNNN, where "!" (or another non-numeric character) identify that the following string represents a Bango number. Similarly a Bango number may be directly entered into any WWW device that only has the ability to enter numeric data (in a form such as #NNNN).

Additionally existing telephone and fax numbers can be used as numbers to address internet resources. This enables the vast telecommunications addressing infrastructure to be used in parallel to access internet locations.

Bango numbers may be allocated in a number of ways. A standard "user registration" process may be used:
1. The user logs onto a web site to search for the availability of a number.
2. The Bango.net computers host a directory service which holds all registered numbers.
3. Searching for any number already registered will cause a message to be returned to the user indicating that the number is already registered and therefore unavailable.
4. When one or more available numbers have been identified, the user proceeds through a registration process.
5. The registration process requires that the user enters certain personal details to establish a registered user record in the Bango.net database.
6. For new users, a password is provided once registration is complete, which they use for subsequent accesses to the web service.
7. The use is prompted to then enter the universal resource locator for a given web page (or other object), which the user wants to number to point to. (Alternatively, if the user does not have their own storage space elsewhere, they may at this stage enter the content to which they wish the number to link with this content being stored on the Bango.net server.)
8. This URL is then stored in the Bango.net database and linked to that number.
9. There is a payment mechanism which enables the user to submit license fees for the service on-line.
10. Users can enter the site at any time, and access to Bango.net service by identifying themselves on-line, in order to modify their number links or to register and license further numbers.

URLs consist of a string of characters that embodies two elements, the server and the reference within that server. This reference may itself contain parameters and other fields. A Bango number provides a single identifier that encapsulates this compound set of information to allow simple referral to this compound information. The structure also enables the URL to be dynamically changed.

No other addressing schemes provide this unique combination of dynamic address resolution to a compound target address structure.

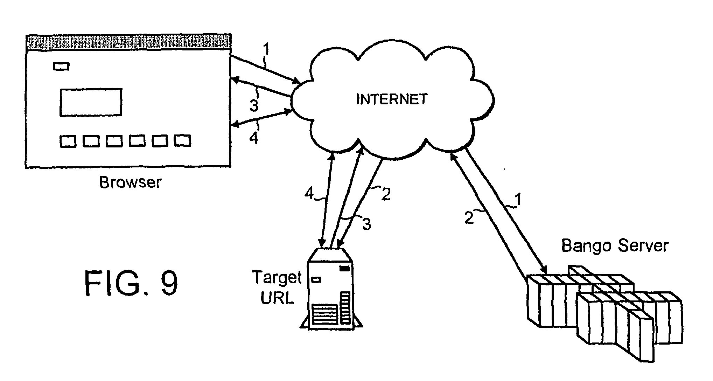

World Wide Web addressing is a key element of the success of the web. However, to date addressing structures have been suited to use within html pages and for dynamic (programmatic) generation. URL addressing is generally believed to be an inviolate attribute of web usage and it is counter non intuitive to consider overriding this fundamental element of the web.
Mapping from Bango number to URL (see Figure 9)
Notes:
1) User enters !911 => Bango server
2) Bango look up directs to
   http://www.us.porsche.com/english/911/models/default.htm
3) Page is displayed normally
4) Session continues directly between browser and Web Server

Bango addressing provides a solution the above described needs, by defining a "Bango" number and the linkage and management of this number to one or more URLs. The Bango number enables a browser user or WWW capable device to simply enter a numeric sequence of numeric digits in order to be able to navigate to a specific WWW address.

Web addressing is dependent upon registration of web server addresses. Standard fees are normally charged to register a specific web server name within a suffix (com, net, org, co.uk etc.) for a finite period.

The feature now described relates to the manner in which Bango addresses are registered and fees charged for their usage

The total "space" of Bango numbers consists of the space of finite integers with length attributes, with time dependence (that is a Bango number may be purchased for a finite period).

This feature defines the manner in which Bango numbers are charged for.

A Bango number has the following primary chargeable attributes:-
a) Length
b) Lifetime
c) Market value/relevance

A pricing algorithm is used to automatically determine the price for a Bango number. This algorithm has the following basic attributes.
a) Price is inversely proportional to length (non-linear)
b) Price is proportional to lifetime
c) A relevance factor may increase or decrease the price for a specific number (e.g. 911 is more valuable than 191)

Additionally specific ranges of numbers may be provided free of charge or under varying pricing rules. Thus a potential customer can select a Bango number based on their specific needs.

The pricing process used for Bango numbers is different from that used for any known product or service. Key differences are that:
a) Pricing is non linear
b) Pricing is based on a period of ownership
c) High value/high relevance numbers are treated as special

In order to map a Bango address to a URL a Bango directory is used. This directory is accessed automatically via the URL www.bango.net/N where N represents the Bango number concerned. The technique used for mapping Bango numbers to URLs is described below.

Web addressing is based on a distributed network of name resolvers that locate the server on which a specific URL resides. The Bango directory defines a numeric addressing structure that is resolved independently of the Web DNS structure and is superimposed on the underlying TCP/IP addressing mechanisms.

In order to minimize resolution delays the Bango server holds an in memory cache that may be preloaded with resolved IP addresses. During idle time the Bango server seeks to pre-resolve server names to expedite URL retrieval. Additionally a cache of most recently accessed Bango numbers may be used. Bango servers can also be replicated to improve performance.

Bango browser plug ins may also be used to provide a distributed cache, whereby the browser may hold recent Bango number mappings and, via interaction with the Bango Server, cache coherence can be achieved.

Effectively Bango mapping uses a distributed hierarchy with cache coherence. The Bango server can further pre-resolve DNS lookups and redirections and, through the use of browser plug-ins can make the browser an active part of this hierarchy.

Many cache schemes are used today to reduce transmission latency and avoid unnecessary network traffic. However, the scheme used by Bango integrates a number of cache techniques into a combination that differs from known existing schemes.
Mapping from Bango number to URL (See Figure 9)
Notes:
1) User enters ! 911 => Bango server
2) Bango server uses indexing mechanism to look up URL via cached database and directs to
   http://www.us.porsche.com/english/911/models/default.htm
3) Page is displayed normally
4) Session continues directly between browser and Web Server

If the browser cache includes a pre-resolved mapping all phases are skipped and browser goes directly to target URL. Typically this will also remove the need for the DNS lookup and the URL request would be dispatched directly to the IP address (32.97.104.162).

## Claims

1. A method of accessing via a computer network a remote data object having an associated primary address formed of alphanumeric characters, said method comprising the steps of:
receiving (20) user input (14) defining a secondary address being an alphanumeric address prefix (12) formed of alphanumeric characters followed by a numeric address suffix (14) formed ofnumeric characters;
mapping (32) said secondary address to said primary address; and
accessing (34) said remote data object using said primary address, **characterised by** the further step of
receiving at least one additional input; and in that
said step of mapping said secondary address to said primary address is dependent upon at least one of said at least one additional input.

2. A method as claimed in claim 1, wherein said alphanumeric address prefix identifies a database (8) that includes mappings of a plurality of numeric address suffixes to respective primary addresses.

3. A method as claimed in any one of claims 1 and 2, wherein said alphanumeric address prefix is a common alphanumerical address prefix for a plurality of secondary addresses.

4. A method as claimed in any one of claims 1, 2 and 3, wherein said secondary address is input by a user using a keyboard without a separate key for each letter of the alphabet.

5. A method as claimed in claim 4, wherein said keyboard is a telephone keypad.

6. A method as claimed in any one of the preceding claims, wherein said alphanumeric address prefix is entered using a keypress shortcut.

7. A method as claimed in claims 5 and 6, wherein said telephone keypad includes a shortcut key (10) providing entry of said alphanumeric address prefix.

8. A method as claimed in any one of the preceding claims, wherein said remote data object is an internet web page.

9. A method as claimed in any one of the preceding claims, wherein said primary address is a URL address.

10. A method as claimed in claim 2, wherein said database is stored on a remote internet server identified by said alphanumeric address prefix.

11. A method as claimed in claim 10, wherein said alphanumeric address prefix is a URL address identifying said remote internet server.

12. A method as claimed in claim 1, wherein said additional input comprises at least one of the following:
location of said user, type of user device, time of user input, identity and/or demographic data of said user, operator and/or network from which said input is received, language specified by said user.

13. A method as claimed in claim 1, said method further comprising the step of passing at least one of said additional inputs to a location identified by said primary address.

14. A method as claimed in any preceding claim, wherein said step of mapping said secondary address to said primary address, comprises mapping a predefined portion of said secondary address to said primary address and passing a further unused portion of said secondary address to a location identified by said primary address.

15. A method as claimed in any preceding claim, said method comprising an additional step prior to said accessing step, said step comprising at least one of the following:
request for access credentials;
transmission of a bill to said user;
collection of survey data;
transmission of advertising and/or sponsorship information to said user;
redirection of said user to a voice call.

16. A method as claimed in any one of the preceding claims, wherein said numeric address suffix terminates said secondary address.

17. Apparatus for accessing via a computer network a remote data object having an associated primary address formed of alphanumeric characters, said apparatus comprising:
a user input device operable to receive user input defining a secondary address being an alphanumeric address prefix formed of alphanumeric characters followed by a numeric address suffix formed of numeric characters;
mapping logic operable to map said secondary address to said primary address; and
accessing logic operable to access said remote data object using said primary address, **characterised in that**
said mapping logic receives at least one additional input; and
said mapping logic is operable to map said secondary address to said primary address in dependence upon at least one of said at least one additional input.

18. A computer program product storing a computer program for controlling operation of a computer to access via a computer network a remote data object having an associated primary address formed of alphanumeric characters, said computer program comprising:
receiver code operable to receive user input defining a secondary address being an alphanumeric address prefix formed of alphanumeric, characters followed by a numeric address suffix formed of numeric characters;
mapping code operable to map said secondary address to said primary address; and
accessing code operable to access said remote data object using said primary address, **characterised in that**
said mapping code receives at least one additional input; and
said mapping code is operable to map said secondary address to said primary address in dependence upon at least one of said at least one additional input.

## Patentansprüche

1. Verfahren für das Zugreifen über ein Computemetzwerk auf ein entferntes Datenobjekt mit einer verknüpften Primäradresse, die aus alphanumerischen Zeichen gebildet wird, wobei das Verfahren die Schritte aufweist:
Empfangen (20) einer Benutzereingabe (14), die eine Sekundäradresse festlegt, die ein alphanumerisches Adreßpräfix (12), gebildet aus alphanumerischen Zeichen, gefolgt von einem numerischen Adreßsuffix (14), das aus numerischen Zeichen gebildet ist, ist,
Abbilden (32) der Sekundäradresse auf die Primäradresse und
Zugreifen (34) auf das entfernte Datenobjekt unter Verwendung der Primäradresse, **gekennzeichnet durch** den weiteren Schritt des
Empfangens von zumindest einer zusätzlichen Eingabe und **dadurch**, daß
der Schritt des Abbildens der Sekundäradresse auf die Primäradresse von mindestens einer der zumindest einen zusätzlichen Eingaben abhängt.

2. Verfahren nach Anspruch 1, bei dem das alphanumerische Adreßpräfix eine Datenbank (8) identifiziert, die Abbildungen einer Mehrzahl von numerischen Adreßsuffixen auf entsprechende Primäradressen beinhaltet.

3. Verfahren nach einem der Ansprüche 1 oder 2, wobei das alphanumerische Adreßpräfix für eine Mehrzahl von Sekundäradressen ein gemeinsames alphanumerisches Adreßpräfix ist.

4. Verfahren nach einem der Ansprüche 1, 2 oder 3, wobei die Sekundäradresse von einem Benutzer eingegeben wird unter Verwendung einer Tastatur ohne eine getrennte Taste für jeden Buchstaben des Alphabets.

5. Verfahren nach Anspruch 4, wobei die Tastatur ein Telefontastenfeld ist.

6. Verfahren nach einem der vorherigen Ansprüche, wobei das alphanumerische Adreßpräfix unter Verwendung einer Tastenkombination eingegeben wird.

7. Verfahren nach Anspruch 5 oder 6, wobei das Telefontastenfeld eine Abkürzungstaste (10) beinhaltet, die die Eingabe des alphanumerischen Adreßpräfixes bereitstellt.

8. Verfahren nach einem der vorherigen Ansprüche, wobei das entfernte Datenobjekt eine Intemetwebseite ist.

9. Verfahren nach einem der vorherigen Ansprüche, wobei die Primäradresse eine URL-Adresse ist.

10. Verfahren nach Anspruch 2, wobei die Datenbank auf einem entfernten Internetserver abgelegt ist, der von dem alphanumerischen Adreßpräfix identifiziert wird.

11. Verfahren nach Anspruch 10, in dem das alphanumerische Adreßpräfix eine URL-Adresse ist, die den entfernten Internetserver identifiziert.

12. Verfahren nach Anspruch 1, bei dem die zusätzliche Eingabe zumindest eine der folgenden Informationen aufweist:
Ort des Benutzers, Typ der Benutzereinrichtung, Zeit der Benutzereingabe, Identität und/oder demographische Daten des Benutzers, Betreiber und/oder Netzwerk, von dem die Eingabe empfangen wird, Sprache, die von dem Benutzer spezifiziert wird.

13. Verfahren nach Anspruch 1, wobei das Verfahren weiterhin aufweist den Schritt des Weiterleitens von zumindest einer der zusätzlichen Eingaben zu einem Ort, der von der Primäradresse identifiziert wird.

14. Verfahren nach einem vorherigen Anspruch, wobei der Schritt des Abbildens der Sekundäradresse auf die Primäradresse das Abbilden eines vorbestimmten Teils der Sekundäradresse auf die Primäradresse und das Weiterleiten eines weiteren nicht verwendeten Abschnitts der Sekundäradresse zu einem Ort, der von der Primäradresse identifiziert wird, aufweist.

15. Verfahren nach einem der vorherigen Ansprüche, wobei das Verfahren vor dem Zugriffsschritt einen zusätzlichen Schritt aufweist, wobei der Schritt zumindest einen der folgenden Vorgänge aufweist:
Anfordern von Zugriffsberechtigungen,
Übertragung einer Rechnung zu dem Benutzer,
Sammeln von Erfassungsdaten,
Übertragen von Werbung und/oder Sponsorinformationen zu dem Benutzer,
Umleiten bzw. Umschalten des Benutzers zu einem Sprachanruf.

16. Verfahren nach einem der vorherigen Ansprüche, wobei das numerische Adreßsuffix die Sekundäradresse beendet.

17. Vorrichtung für das Zugreifen über ein Computemetzwerk auf ein entferntes Datenobjekt mit einer verknüpften Primäradresse, die aus alphanumerischen Zeichen gebildet wird, wobei die Vorrichtung aufweist:
eine Benutzereingabeeinrichtung, die derart betreibbar ist, daß sie die Benutzereingabe empfängt, die eine Sekundäradresse festlegt, die ein alphanumerisches Adreßpräfix, das aus alphanumerischen Zeichen gebildet wird, gefolgt von einem numerischen Adreßsuffix, das aus numerischen Zeichen gebildet wird, ist,
eine Abbildungslogik, die betreibbar ist, um die Sekundäradresse auf die Primäradresse abzubilden, und
eine Zugriffslogik, die betreibbar ist, um unter Verwendung der Primäradresse auf das entfernte Datenobjekt zuzugreifen, **dadurch gekennzeichnet, daß**
die Abbildungslogik zumindest eine zusätzliche Eingabe empfängt und
die Abbildungslogik betreibbar ist, um die Sekundäradresse auf die Primäradresse in Abhängigkeit von zumindest einer der mindestens einen zusätzlichen Eingabe abzubilden.

18. Computerprogrammprodukt, das ein Computerprogramm speichert, für das Steuern des Betriebs eines Computers, um über ein Computemetzwerk auf ein entferntes Datenobjekt mit einer verknüpften Primäradresse, die aus alphanumerischen Zeichen gebildet wird, zuzugreifen, wobei das Computerprogramm aufweist:
einen Empfangscode, der betreibbar ist, um eine Benutzereingabe zu empfangen, die eine Sekundäradresse festlegt, die ein alphanumerisches Adreßfeld, das aus alphanumerischen Zeichen gebildet wird, gefolgt von einem numerischen Adreßsuffix, das aus numerischen Zeichen gebildet wird, ist,
einen Abbildungscode, der betreibbar ist, um die Sekundäradresse auf die Primäradresse abzubilden, und
einen Zugriffscode, der betreibbar ist, um auf das entfernte Datenobjekt unter Verwendung der Primäradresse zuzugreifen, **dadurch gekennzeichnet, daß**
der Abbildungscode zumindest eine zusätzliche Eingabe empfängt und
der Abbildungscode betreibbar ist, um die Sekundäradresse in Abhängigkeit von zumindest einer der mindestens einen zusätzlichen Eingabe auf die Primäradresse abzubilden.

## Revendications

1. Procédé d'accès par l'intermédiaire d'un réseau informatique à un objet de données distant possédant une adresse primaire associée formée de caractères alphanumériques, ledit procédé comprenant les étapes consistant à :
recevoir (20) une entrée utilisateur (14) définissant une adresse secondaire constituée d'un préfixe d'adresse alphanumérique (12) constitué de caractères alphanumériques suivis d'un suffixe d'adresse numérique (14) constitué de caractères numériques;
mettre en correspondance (32) ladite adresse secondaire avec ladite adresse primaire ; et
accéder (34) audit objet de données distant en utilisant ladite adresse primaire, **caractérisé par** l'étape supplémentaire consistant à :
recevoir au moins une entrée supplémentaire ; et en ce que
ladite étape de mise en correspondance de ladite adresse secondaire avec ladite adresse primaire dépend d'au moins une desdites, au moins une, entrées supplémentaires.

2. Procédé selon la revendication 1, dans lequel ledit préfixe d'adresse alphanumérique identifie une base de données (8) qui comprend les mises en correspondance d'une pluralité de suffixes d'adresse numériques avec les adresses primaires respectives.

3. Procédé selon l'une quelconque des revendications 1 et 2, dans lequel ledit préfixe d'adresse alphanumérique est un préfixe d'adresse alphanumérique commun pour une pluralité d'adresses secondaires.

4. Procédé selon l'une quelconque des revendications 1, 2 et 3, dans lequel ladite adresse secondaire est entrée par un utilisateur en utilisant un clavier sans touche distincte pour chaque lettre de l'alphabet.

5. Procédé selon la revendication 4, dans lequel ledit clavier est un clavier de téléphone.

6. Procédé selon l'une quelconque des revendications précédentes, dans lequel ledit préfixe d'adresse alphanumérique est entré en utilisant un raccourci clavier.

7. Procédé selon les revendications 5 et 6, dans lequel ledit clavier de téléphone comprend une touche de raccourci (10) fournissant une entrée dudit préfixe d'adresse alphanumérique.

8. Procédé selon l'une quelconque des revendications précédentes, dans lequel ledit objet de données distant est une page web.

9. Procédé selon l'une quelconque des revendications précédentes, dans lequel ladite adresse primaire est une adresse URL.

10. Procédé selon la revendication 2, dans lequel ladite base de données est stockée sur un serveur internet distant identifié par ledit préfixe d'adresse alphanumérique.

11. Procédé selon la revendication 10, dans lequel ledit préfixe d'adresse alphanumérique est une adresse URL identifiant ledit serveur internet distant.

12. Procédé selon la revendication 1, dans lequel ladite entrée supplémentaire comprend au moins l'un des items suivants :
la localisation dudit utilisateur, le type du dispositif de l'utilisateur, l'heure de l'entrée de l'utilisateur, l'identité et/ou les données démographiques dudit utilisateur, l'opérateur et/ou le réseau à partir duquel ladite entrée est reçue, la langue spécifiée par ledit utilisateur.

13. Procédé selon la revendication 1, ledit procédé comprenant de plus l'étape de passation d'au moins l'une desdites entrées supplémentaires vers un emplacement identifié par ladite adresse primaire.

14. Procédé selon l'une quelconque des revendications précédentes, dans lequel ladite étape de mise en correspondance de ladite adresse secondaire avec ladite adresse primaire, comprend la mise en correspondance d'une partie prédéfinie de ladite adresse secondaire avec ladite adresse primaire et la passation d'une partie supplémentaire inutilisée de ladite adresse secondaire vers un emplacement identifié par ladite adresse primaire.

15. Procédé selon l'une quelconque des revendications précédentes, ledit procédé comprenant une étape supplémentaire antérieure à ladite étape d'accès, ladite étape comprenant au moins un des items suivants :
la demande d'une preuve de droit d'accès ;
la transmission d'une facture audit utilisateur ;
le recueil de données d'étude ;
la transmission d'informations publicitaires et/ou de sponsoring audit utilisateur ;
le réacheminement dudit utilisateur vers un appel vocal.

16. Procédé selon l'une quelconque des revendications précédentes, dans lequel ledit suffixe d'adresse numérique termine ladite adresse secondaire.

17. Dispositif pour accéder, par l'intermédiaire d'un réseau informatique, à un objet de données distant possédant une adresse primaire associée constituée de caractères alphanumériques, ledit dispositif comprenant :
un dispositif d'entrée utilisateur utilisable pour recevoir une entrée utilisateur définissant une adresse secondaire constituée d'un préfixe d'adresse alphanumérique constitué de caractères alphanumériques suivis d'un suffixe d'adresse numérique constitué de caractères numériques ;
une logique de mise en correspondance utilisable pour mettre en correspondance ladite adresse secondaire avec ladite adresse primaire ; et
une logique d'accès utilisable pour accéder audit objet de données distant en utilisant ladite adresse primaire, **caractérisé en ce que**
ladite logique de mise en correspondance reçoit au moins une entrée supplémentaire ; et
ladite logique de mise en correspondance est utilisable pour mettre en correspondance ladite adresse secondaire avec ladite adresse primaire en fonction d'au moins l'une desdites, au moins une, entrées supplémentaires.

18. Produit de programme informatique stockant un programme informatique pour commander le fonctionnement d'un ordinateur pour accéder, par l'intermédiaire d'un réseau informatique, à un objet de données distant possédant une adresse primaire associée constituée de caractères alphanumériques, ledit programme informatique comprenant :
un code de récepteur utilisable pour recevoir une entrée utilisateur définissant une adresse secondaire constituée d'un préfixe d'adresse alphanumérique constitué de caractères alphanumériques suivis d'un suffixe d'adresse numérique constitué de caractères numériques ;
un code de mise en correspondance utilisable pour mettre en correspondance ladite adresse secondaire avec ladite adresse primaire ; et
un code d'accès utilisable pour accéder audit objet de données distant en utilisant ladite adresse primaire, **caractérisé en ce que** :
ledit code de mise en correspondance reçoit au moins une entrée supplémentaire ; et
ledit code de mise en correspondance est utilisable pour mettre en correspondance ladite adresse secondaire avec ladite adresse primaire en fonction d'au moins une desdites, au moins une, entrées supplémentaires.
